# EUROPEAN PATENT APPLICATION

(11) **EP 4 418 028 A1**
(43) Date of publication of application: **21.08.2024**
(21) Application number: 22880631.1
(22) Date of filing: 16.08.2022
(51) Int. Cl.: G02B 6/36, G02B 6/02, G02B 6/024, G02B 6/04

(54) **OPTICAL CONNECTOR**

(30) Priority: 13.10.2021 JP 2021167986
(71) Applicant: SUMITOMO ELECTRIC INDUSTRIES, LTD., Osaka-shi, Osaka 541-0041 (JP)
(72) Inventor: MORISHIMA Tetsu, Osaka-shi, Osaka 541-0041 (JP); ARAO Yuki, Osaka-shi, Osaka 541-0041 (JP)
(74) Representative: TBK
(86) International application number: PCT/JP2022/030962
(87) International publication number: WO 2023/062934

(57) **Abstract**

An optical connector according to the present disclosure suppresses fluctuations in the state of alignment of an optical fiber with respect to a housing. The optical connector comprises: an optical fiber; a ferrule assembly which has a holding portion that is provided with a ferrule and a flange; a housing which has an inner wall surface that defines an internal space in which the holding portion is housed, a reference surface that constitutes a portion of the inner wall surface, and a positioning part; and an elastic member which biases the flange toward the positioning part. The reference surface includes abutment portions which restrict the rotational orientation of the flange by being abutted against a portion of the outer peripheral surface of the flange and which are provided at two locations that are spaced from each other by a predetermined distance.

## Description

### TECHNICAL FIELD

The present disclosure relates to an optical connector. This application claims priority based on Japanese Patent Application No. 2021-167986 filed on October 13, 2021, and the entire contents of the Japanese patent application are incorporated herein by reference.

### BACKGROUND ART

NPL 1 discloses an MU type optical connector for a multi-core optical fiber (hereinafter, referred to as "MCF"). In such an MU type optical connector, rotational positioning of a zirconia ferrule mounted on a tip portion of the MCF in a housing is important. In order to achieve the rotational positioning of the ferrule in the housing, in the optical connector described in NPL 1, a flange of a holding part that holds one end of the ferrule is used as a reference for rotation angle. That is, after the ferrule is positioned at a predetermined rotation angle with respect to the flange, the one end of the ferrule is press-fitted into the holding part, so that the ferrule is fixed to a member having the flange, and as a result, the ferrule assembly including the ferrule is assembled. Then, the ferrule assembly is mounted in the housing so that a structure serving as a reference for rotation angle in the housing coincides with the reference for rotation angle of the flange of the ferrule assembly assembled as described above.

### Citation List

### NON-PATENT LITERATURES

NPL 1: Sakaime, et al., "MU-Type Multi-fiber connector", 2012 Communications Society Conference of the Institute of Electronics, Information and Communication Engineers, B-13-9, p. 308 (Collection of Communication Lectures 2)

### SUMMARY OF INVENTION

An optical connector of the present disclosure includes an optical fiber, a front end portion, a rear end portion positioned on a side opposite to the front end portion, a ferrule assembly, a housing, and an elastic member. The optical fiber includes a glass fiber and a resin coating covering the glass fiber. The ferrule assembly includes a ferrule and a holding part. The ferrule is fixed to, of the optical fiber, a tip portion of the glass fiber exposed from the resin coating. A rear end portion of the ferrule is fixed to the holding part, and the holding part is provided with a flange. The housing includes an inner wall surface, a reference surface, and a positioning part. The inner wall surface defines an internal space in which at least the holding part of the ferrule assembly is accommodated. The reference surface constitutes a part of the inner wall surface and is positioned to face a part of an outer peripheral surface of the flange. The positioning part restricts a movement of the holding part in the internal space. The elastic member, such as a spring member as an example, is configured to urge the flange toward the positioning part to stabilize an installation state of the holding part in the internal space. In particular, the reference surface includes two contact parts provided apart from each other by a predetermined distance and restricting a rotational direction of the flange as a result of a part of the outer peripheral surface of the flange contacting the contact parts.

### BRIEF DESCRIPTION OF DRAWINGS

FIG. 1 is a diagram for explaining a schematic structure of an optical connector of the present disclosure.
FIG. 2 is a diagram for explaining various assembly processes of a ferrule assembly including an alignment operation.
FIG. 3 is a diagram for explaining a change in a shape of a flange at the time of assembling a ferrule assembly.
FIG. 4 is a diagram for explaining flange installation structures at the time of rotational alignment together with a comparative example.
FIG. 5 is a diagram for explaining a cross-sectional structure of each part of an optical connector of the present disclosure and a floating structure of a ferrule assembly accommodated in a housing.
FIG. 6 is a diagram showing modified examples of an internal structure of an optical connector of the present disclosure.
FIG. 7 is a diagram for explaining flange installation states at the time of rotational alignment in a housing.

### DETAILED DESCRIPTION

### [Problems to be solved by Present Disclosure]

As a result of examining the above-described prior art, the inventors discovered the following problems. That is, in the ferrule assembly mounted in the housing, the flange is highly likely to be deformed by press-fitting the ferrule into the holding part. In this case, the rotation error occurs between the structure serving as the reference for rotation angle in the housing and the reference for rotation angle of the flange. Specifically, when the ferrule is press-fitted into the holding part, the flange swells around the center of an outer peripheral surface of the flange, that is, so-called "thickening" occurs. Deformation of a reference for rotation angle of the MCF due to the "thickening" is substantially deformation of the flange, and causes the angular deviation, that is, the rotational error with respect to the reference for rotation angle in the housing.

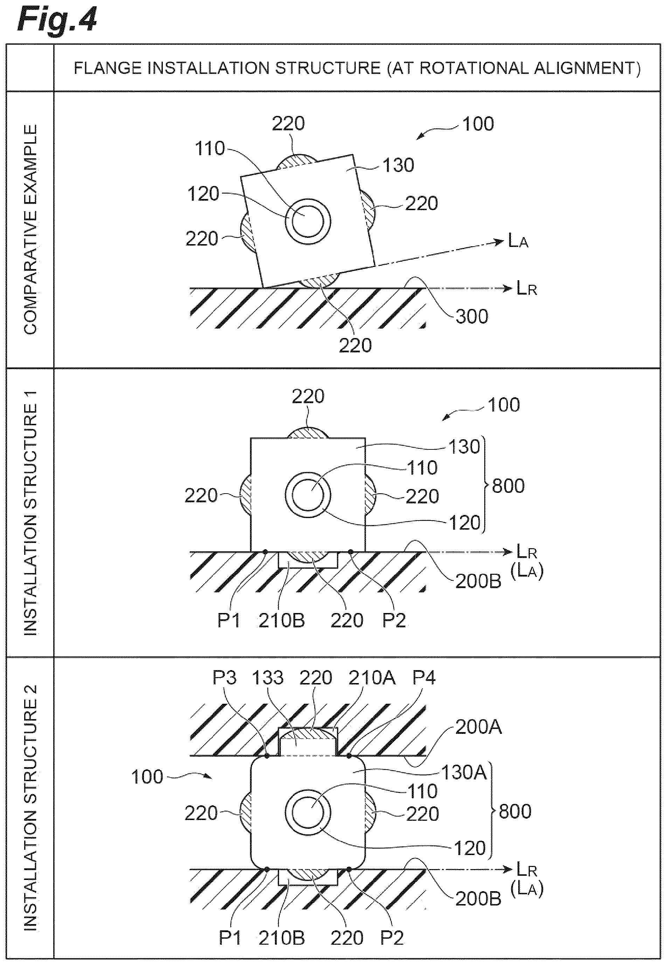

In the case of the optical connector disclosed in the above NPL 1, it is known that, when the zirconia ferrule is press-fitted into a metal holding part having the flange, a central portion of an outer peripheral surface of the flange swells on the order of 100 µm (hereinafter, referred to as "thickening" of the flange). The "thickening" of the flange deforms a shape of the reference for rotation angle of the flange which is assumed to be a straight line or a flat surface. As a result, such deformation of the shape of the member causes a rotational deviation of the MCF mounted in the housing, as shown in the upper row (Comparative Example) of FIG. 4, for example.

The present disclosure has been made to solve the problems described above, and an object of the present disclosure is to provide an optical connector including a structure for suppressing a variation in an alignment state of an optical fiber with respect to a housing, that is, a rotational deviation of the optical fiber aligned with respect to a flange.

### [Advantageous Effects of Present Disclosure]

According to an optical connector of the present disclosure, a variation in an alignment state of an optical fiber with respect to a housing, that is, a rotational deviation of the optical fiber aligned with respect to a flange is effectively suppressed.

### [Description of embodiments of the present disclosure]

First, the contents of embodiments of the present disclosure will be described by listing them individually.
(1) An optical connector of the present disclosure includes an optical fiber, a front end portion, a rear end portion positioned on a side opposite to the front end portion, a ferrule assembly, a housing, and an elastic member. The optical fiber includes a glass fiber and a resin coating covering the glass fiber. The ferrule assembly includes a ferrule and a holding part. The ferrule is fixed to, of the optical fiber, a tip portion of the glass fiber exposed from the resin coating. A rear end portion of the ferrule is fixed to the holding part, and the holding part is provided with a flange. The housing includes an inner wall surface, a reference surface, and a positioning part. The inner wall surface defines an internal space in which at least the holding part of the ferrule assembly is accommodated. The reference surface constitutes a part of the inner wall surface and is positioned to face a part of an outer peripheral surface of the flange. The positioning part restricts a movement of the holding part in the internal space. The elastic member, such as a spring member as an example, is configured to urge the flange toward the positioning part to stabilize an installation state of the holding part in the internal space. In particular, the reference surface includes two contact parts provided apart from each other by a predetermined distance and restricting a rotational direction of the flange as a result of a part of the outer peripheral surface of the flange contacting the contact parts.
   As described above, in the optical connector of the present disclosure, a region of the outer peripheral surface of the flange facing the reference surface and the reference surface (an internal structure of the housing) are set as a reference for the rotational direction of the flange, that is, a reference for rotation angle. That is, a rotational direction of the optical fiber having the ferrule attached to the tip portion is also adjusted based on the reference for rotation angle of the flange. At this time, the optical fiber is aligned with the flange. With this configuration, the rotational direction of the flange in the housing is fixed, and as a result, a variation in an alignment state of the optical fiber is effectively suppressed.
(2) In the above (1), the reference surface may include a recessed part. The recessed part includes a bottom portion provided at a region interposed between the contact parts, the bottom portion facing the outer peripheral surface of the flange without contacting the outer peripheral surface of the flange. In this way, by providing the recessed part having the bottom surface which does not contact the outer peripheral surface of the flange at the region interposed between the contact surfaces, a deformation of the outer peripheral surface which is a "thickening" of the flange due to an attachment of the ferrule is invalidated, and as a result, the rotational direction of the flange is fixed well.
(3) In the above (2), the flange may have a structure including a projection. The projection is provided on the outer peripheral surface of the flange facing the reference surface and is accommodated in the recessed part provided on the reference surface. In this case, since a variation of the rotational direction of the flange in the housing is restricted, the alignment state of the optical fiber with respect to the housing is reliably maintained.
(4) In any one of the above (1) to (3), the optical connector may have a floating structure. The floating structure is such that the ferrule is pushed toward the rear end portion of the optical connector from the front end portion of the optical connector to thereby vary an installation position of the ferrule assembly in the housing. By adopting such a floating structure in the optical connector, when two optical connectors are mounted on an adapter having an alignment sleeve and a sleeve holder, good optical connection can be achieved without causing damage to the two optical connectors.
(5) In any one of the above (1) to (4), an external shape of the flange may be a quadrilateral shape when the flange is viewed toward the rear end portion of the optical connector from the front end portion of the optical connector. In the present specification, the term "quadrilateral shape" is a type of polygon that indicates a part of a plane surrounded by four straight lines on the plane. With this configuration, the flange itself can have the reference for rotation angle, and thus the rotational direction of the flange can be stably maintained in cooperation with the reference surface of the housing.
(6) In the above (5), an outer diameter shape of the flange may have a D-shaped structure in which a pair of corners are curved, with at least one of facing sides of the outer diameter shape being interposed between the pair of corners. In this case, smooth movement of the flange in the floating structure is possible.
(7) In any one of the above (1) to (6), the optical fiber may be any one of a multi-core optical fiber, a polarization maintaining optical fiber, and a bundle fiber. This is because, in any optical fibers, when two optical fibers are optically connected to each other, the rotational direction of the flange needs to be precisely controlled.

### [Details of embodiments of the present disclosure]

Hereinafter, specific structures of the optical connector of the present disclosure will be described in detail with reference to the accompanying drawings. The present invention is not limited to these examples, but is defined by the scope of the claims, and is intended to include all modifications within the meaning and scope equivalent to the scope of the claims. In addition, in the description of the drawings, the same elements are denoted by the same reference numerals, and redundant description thereof will be omitted.

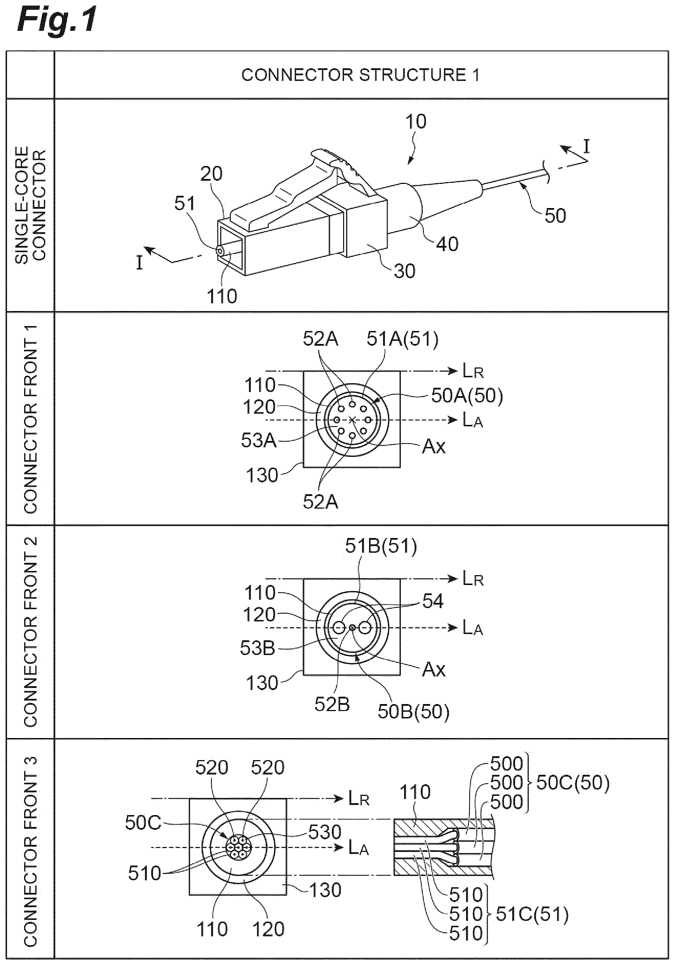

FIG. 1 is a diagram for explaining a schematic structure of an optical connector of the present disclosure. Specifically, an example of an appearance of a push-pull type optical connector 10 is shown in the uppermost row as an example of the optical connector of the present disclosure (in FIG. 1, referred to as "single-core connector"). The second row shows a front view of optical connector 10 including an end surface of an MCF 50A, which is a multi-core optical fiber that particularly requires an alignment, as an optical fiber 50 to which a ferrule 110 is attached (in FIG. 1, referred to as "Connector Front 1"). The third row shows a front view of optical connector 10 including an end surface of a PMF 50B, which is a polarization maintaining optical fiber, as another example of optical fiber 50 to which ferrule 110 is attached (in FIG. 1, referred to as "Connector Front 2"). The lowermost row shows a front view and a cross-sectional view of a bundle fiber 50C in which a plurality of single-core optical fibers is bundled (in FIG. 1, referred to as "Connector Front 3").

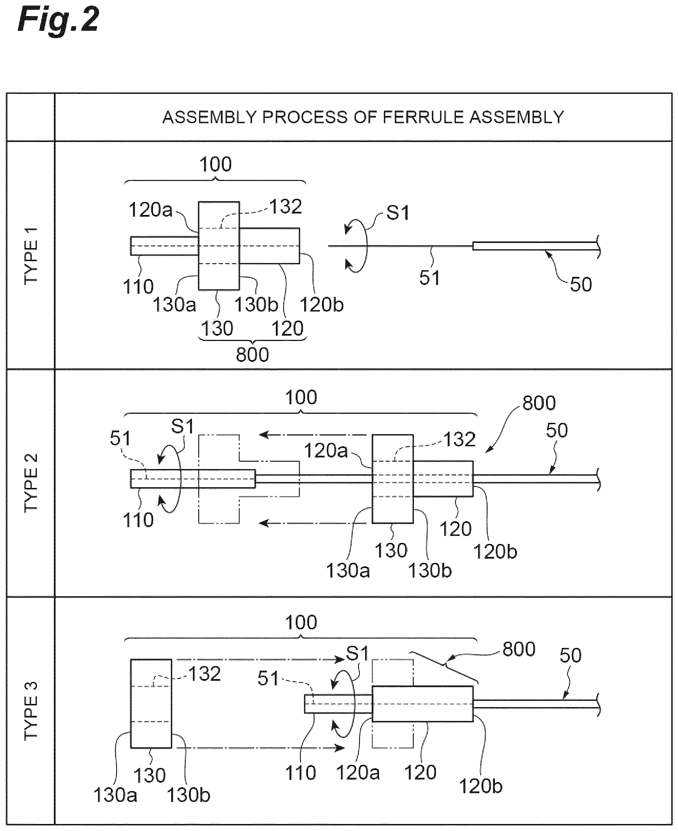

A housing of optical connector 10 shown in the uppermost row of FIG. 1 is constituted by a front housing 20 and a rear housing 30, and in the housing, a ferrule assembly 100 including ferrule 110 and an elastic member, for example, a spring member, for stably maintaining a housing position of ferrule assembly 100 are accommodated. A tip portion including an end surface of optical fiber 50 corresponds to a glass fiber 51 from which a resin coating is removed, ferrule 110 is attached to glass fiber 51, and a boot 40 is attached to rear housing 30 to protect optical fiber 50 extending from rear housing 30. As shown in FIG. 2, ferrule assembly 100 includes ferrule 110 attached to a tip portion of glass fiber 51 from which the resin coating is removed, and a holding part constituted by a flange 130 and a sleeve 120, and a rear end portion of the ferrule is inserted into sleeve 120 as a ferrule fixing structure by the holding part.

The front view of optical connector 10 shown in the second row of FIG. 1 (Connector Front 1) shows the end surface of MCF 50A as optical fiber 50 requiring an alignment, ferrule 110 attached to a glass fiber 51A corresponding to a tip portion of MCF 50A, sleeve 120 with ferrule 110 inserted into, and flange 130. MCF 50A includes a plurality of cores 52A each extending along a fiber axis AX which is a central axis of MCF 50A, and a common cladding 53A surrounding each of the plurality of cores 52A. A line L_{A} indicates a reference direction of a rotational alignment of MCF 50A, that is, a direction at a rotation angle of 0°. A line L_{R} is an installation reference line of ferrule assembly 100 along an edge of flange 130, that is, a reference for rotation angle of the flange. In ferrule assembly 100 including MCF 50A after the alignment, line L_{A} and line L_{R} are parallel to each other.

The front view of optical connector 10 shown in the third row of FIG. 1 (Connector Front 2) shows the end surface of PMF 50B as optical fiber 50 requiring an alignment, ferrule 110 attached to a glass fiber 51B corresponding to a tip portion of PMF 50B, sleeve 120 with ferrule 110 inserted into, and flange 130. PMF 50B includes a core 52B extending along a fiber axis AX which is a central axis of PMF 50B, stress applying parts 54 disposed to sandwich core 52B, and a common cladding 53B surrounding each of core 52B and stress applying parts 54. In ferrule assembly 100 including PMF 50B after the alignment, line L_{A} and line L_{R} are parallel to each other.

The front view of optical connector 10 shown in the lowermost row of FIG. 1 (Connector Front 3) shows an end surface of bundle fiber 50C as optical fiber 50 requiring alignment, ferrule 110 to which tip portions of a plurality of single-core optical fibers 500 constituting bundle fiber 50C are integrally attached, sleeve 120 with ferrule 110 inserted into, and flange 130. Each of the plurality of single-core optical fibers 500 is constituted by a glass fiber 510 and a resin coating, and each glass fiber 510 includes a core 520 and a cladding 530. Glass fibers 510 bundled by ferrule 110 constitute a glass fiber 51C. In addition, an arrangement of cores 520 in a state where the plurality of glass fibers 510 are bundled substantially corresponds to the core arrangement of MCF 50A described above. In ferrule assembly 100 including bundle fiber 50C after the alignment, line L_{A} and line L_{R} are parallel to each other.

FIG. 2 is a diagram for explaining various assembly processes (including alignment operations) of the ferrule assembly (in FIG. 2, referred to as "Assembly Process of Ferrule Assembly"). Specifically, the upper row (in FIG. 2, referred to as "Type 1") is a diagram for explaining a method of aligning optical fiber 50 with respect to ferrule assembly 100 which is assembled in advance. The middle row (in FIG. 2, referred to as "Type 2") is a diagram for explaining a method of assembling ferrule assembly 100 by aligning optical fiber 50 having ferrule 110 attached to the tip portion thereof with respect to flange 130 integrated with sleeve 120. The lower row (in FIG. 2, referred to as "Type 3") is a diagram for explaining a method of assembling ferrule assembly 100 after aligning optical fiber 50 having ferrule 110 and sleeve 120 attached to the tip portion with respect to flange 130. Sleeve 120 and flange 130 constitute a holding part for holding one end portion of ferrule 110.

In "Type 1" shown in the upper row of FIG. 2, a structure to be ferrule assembly 100 is assembled before being attached to glass fiber 51 corresponding to a tip portion of optical fiber 50. As described above, ferrule assembly 100 is constituted by ferrule 110 and a holding part 800, and holding part 800 is constituted by sleeve 120 having a front end surface 120a and a rear end surface 120b and flange 130 having a front surface 130a and a rear surface 130b. A rear portion of ferrule 110 is press-fitted into an opening of front end surface 120a of sleeve 120, and front end surface 120a side of sleeve 120, in a state where ferrule 110 is mounted, is press-fitted into a through hole 132 of flange 130. When the alignment operation of optical fiber 50, which is performed by rotating optical fiber 50 by a predetermined angle in a direction indicated by an arrow S1, is completed, ferrule 110 of ferrule assembly 100 which has already been assembled is attached to the tip portion of aligned optical fiber 50. The front view of ferrule assembly 100 attached to optical fiber 50 after the alignment coincides with the front view shown in the second row to the lowermost row of FIG. 1.

In "Type 2" shown in the middle row of FIG. 2, optical fiber 50 is aligned in a state where ferrule 110 is attached to glass fiber 51 corresponding to the tip portion of optical fiber 50. Specifically, the alignment is a rotation operation of optical fiber 50 along the direction indicated by arrow S1. During the alignment, optical fiber 50 is maintained in a state of passing through a through hole of holding part 800 which is a structure formed of sleeve 120 and flange 130, which has been already assembled by press-fitting sleeve 120 into through hole 132 of flange 130. When the alignment operation is completed, one end of ferrule 110 attached to the tip portion of optical fiber 50 is press-fitted into a through hole of sleeve 120 from front end surface 120a side of sleeve 120. The front view of ferrule assembly 100 attached to optical fiber 50 after the alignment coincides with the front view shown in the second row to the lowermost row of FIG. 1.

Further, in "Type 3" shown in the lower row of FIG. 2, the alignment of optical fiber 50, that is, the rotation operation of optical fiber 50 along the direction indicated by arrow S1 is performed in a state where a structure formed of ferrule 110 and sleeve 120 is attached to glass fiber 51 corresponding to the tip portion of optical fiber 50. Ferrule 110 is press-fitted into the opening of front end surface 120a of sleeve 120 in a state where ferrule 110 is attached to the tip portion of optical fiber 50. During the alignment, optical fiber 50 is maintained in a state of passing through the through hole of the already assembled structure. When the alignment operation is completed, a front portion of sleeve 120, which forms the structure attached to the tip portion of optical fiber 50, is press-fitted into through hole 132 of flange 130. Accordingly, holding part 800 to which a rear end portion of ferrule 110 is fixed is formed. The front view of ferrule assembly 100 attached to optical fiber 50 after the alignment coincides with the front view shown in the second row to the lowermost row of FIG. 1.

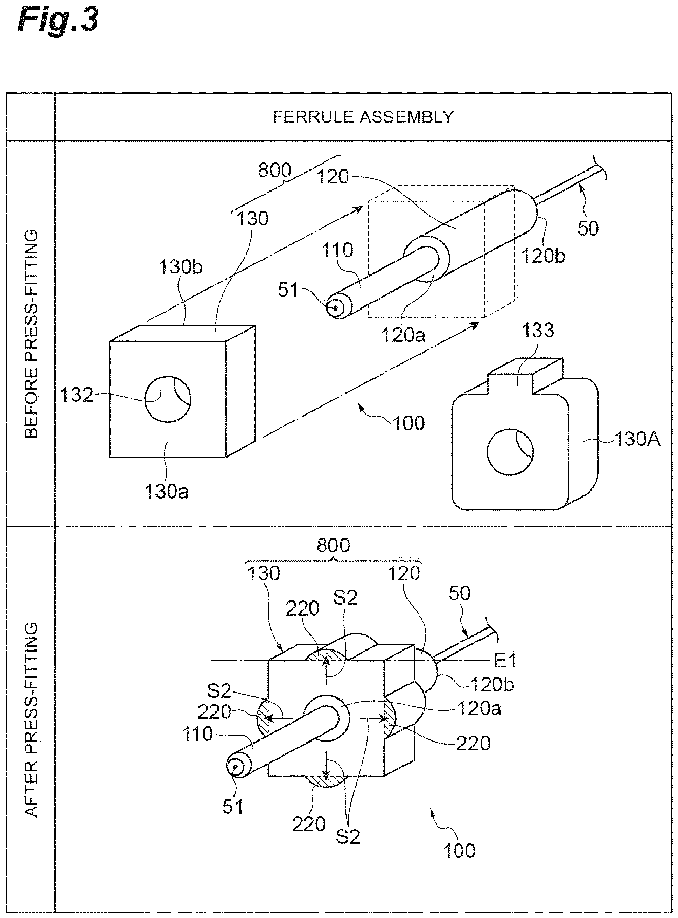

FIG. 3 is a diagram for explaining a change in a shape of a flange in ferrule assembly 100 assembled as described above. Specifically, the upper row is a diagram showing a state before a sleeve is press-fitted into an opening of the flange and a diagram showing the flange having a different structure (in FIG. 3, referred to as "Before Press-Fitting"). The lower row is a diagram showing a state after the sleeve is press-fitted into the opening of the flange (in FIG. 3, referred to as "After Press-Fitting").

Ferrule assembly 100 shown in the upper row of FIG. 3 is constituted by ferrule 110 attached to the tip portion of optical fiber 50 and a separate type holding part 800 constituted by a plurality of members. Separate type holding part 800 is constituted by sleeve 120 into which one end of ferrule 110 is press-fitted, and flange 130. Sleeve 120 has front end surface 120a and rear end surface 120b, and has a through hole that connects front end surface 120a and rear end surface 120b. Flange 130 has through hole 132 into which front end surface 120a side of sleeve 120 is press-fitted. Both front surface 130a and rear surface 130b of flange 130, where openings of through hole 132 are located, have a quadrilateral shape. On the other hand, a flange 130A having a different structure is provided with a projection 133 on an outer peripheral surface for suppressing a variation in a rotational direction of flange 130A. In addition, a pair of corners of an end surface shape of flange 130A is defined by curved line, at least one of facing sides of the end surface shape being interposed between the pair of corners. The configuration in which the corner is processed to be curved as described above can be applied to flange 130. Further, in the example shown in the upper row of FIG. 3, the holding part in which sleeve 120 and one of flange 130 and flange 130A are formed of separate members is shown, but for holding part 800, an integrated configuration may be adopted in which sleeve 120 and one of these two types of flanges are formed of a single member.

As shown in the lower row of FIG. 3, when front end surface 120a side of sleeve 120 is press-fitted into through hole 132 of flange 130, front end surface 120a of sleeve 120 and front surface 130a of flange 130 are substantially aligned with each other. Front end surface 120a of sleeve 120 may somewhat protrude or recede from front surface 130a of flange 130. Further, due to the press-fitting of sleeve 120, flange 130 is deformed in the direction indicated by arrows S2, and deformed portions 220 protruding outward from through hole 132 side are formed. When a ferrule assembly 200 is accommodated in the housing of optical connector 10, a rotational direction of optical fiber 50 to which ferrule 110 is attached is inclined with respect to an inner wall surface of the housing as shown in the upper row of FIG. 4. As a result, an alignment state of optical fiber 50 with respect to optical connector 10 becomes unstable due to a variation in a rotational direction of ferrule assembly 200.

FIG. 4 is a diagram for explaining flange installation structures at the time of rotational alignment together with a comparative example. Specifically, the upper row shows a state where ferrule assembly 100 having flange 130 contacting a reference surface 300 set as a reference for rotation angle in the inner wall surfaces of the housing (in FIG. 4, referred to as "Comparative Example"). The middle row shows a state where ferrule assembly 100 having flange 130 contacting a lower reference surface 200B having a recessed part 210B in the inner wall surface of the housing (in FIG. 4, referred to as "Installation Structure 1"). The lower row shows a state in which ferrule assembly 100 with flange 130A is contact with and sandwiched between reference surfaces 200A and 200B, which are the upper and lower two reference surfaces set as the reference for rotation angle in the inner wall surfaces of the housing and are respectively provided with recessed parts 210A and 210B (in FIG. 4, referred to as "Installation Structure 2"). In the embodiment, flange 130 may be brought into contact with at least one of reference surfaces 200A and 200B.

Line L_{A} shown in FIG. 1 as the reference direction of the optical fiber after the alignment is set parallel to the edge of flange 130 or flange 130A that is, line L_{R} serving as the reference for rotation angle, and the parallel relationship is maintained regardless of the installation state of the ferrule assembly. In addition, when ferrule assembly 100 is correctly mounted in the housing, the reference for rotation angle of flange 130 or flange 130A and the reference for rotation angle of the reference surface in the housing coincide with each other. Therefore, in FIG. 4, in order to easily confirm a rotational deviation of flange 130 or flange 130A with respect to the housing, line L_{A} is shown so as to coincides with the edge of flange 130 or flange 130A, and line L_{R} is shown so as to coincides with each of reference surfaces 300, 200A, and 200B which are the reference for rotation angle in the housing.

In the Comparative Example shown in the upper row of FIG. 4, ferrule assembly 100 has deformed portions 220 of flange 130 as shown in the lower row of FIG. 3, and flange 130 itself is deformed. Reference surface 300, which is in contact with an outer peripheral surface of flange 130 of ferrule assembly 100, is not provided with a recessed part. In such a Comparative Example, the presence of deformed portion 220 of flange 130 causes a rotational deviation between reference surface 300 serving as the reference for rotation angle and flange 130.

On the other hand, ferrule assembly 100 in the middle row of FIG. 4, deformed portions 220 are generated in flange 130 as shown in the lower row of FIG. 3, and flange 130 itself is deformed. However, recessed part 210B is provided on reference surface 200B located on the lower side of the housing, and deformed portion 220 generated in flange 130 is accommodated therein. The bottom surface of recessed part 210B is not in contact with deformed portion 220 formed on the outer peripheral surface of flange 130. As described above, in Installation Structure 1, even when deformed portion 220 is generated in flange 130, the state in which the reference for rotation angle of flange 130 and the reference for rotation angle of reference surface 200B on the lower side of the housing coincide with each other is maintained.

In the lower row of FIG. 4, ferrule assembly 100 has flange 130A with projection 133 as shown in the upper row of FIG. 3. Also in ferrule assembly 100, deformed portion 220 is generated in flange 130A as shown in the lower row of FIG. 3, and flange 130A itself is deformed. Further, recessed part 210A is provided on upper reference surface 200A, recessed part 210B is provided on lower reference surface 200B, and flange 130A is installed in a state of being sandwiched between reference surface 200A and reference surface 200B. At this time, projection 133 of flange 130A is accommodated in upper recessed part 210A and functions to suppress a rotation of flange 130A. Both recessed parts 210A and 210B accommodate deformed portions 220 generated in flange 130A. At least the bottom surface of recessed part 210B is not in contact with deformed portion 220 formed on the outer peripheral surface of flange 130A. As described above, also in Installation Structure 2, even when deformed portion 220 is generated in flange 130A, the state in which the reference for rotation angle of flange 130A and the references for rotation angles of reference surfaces 200A and 200B coincide with each other is maintained.

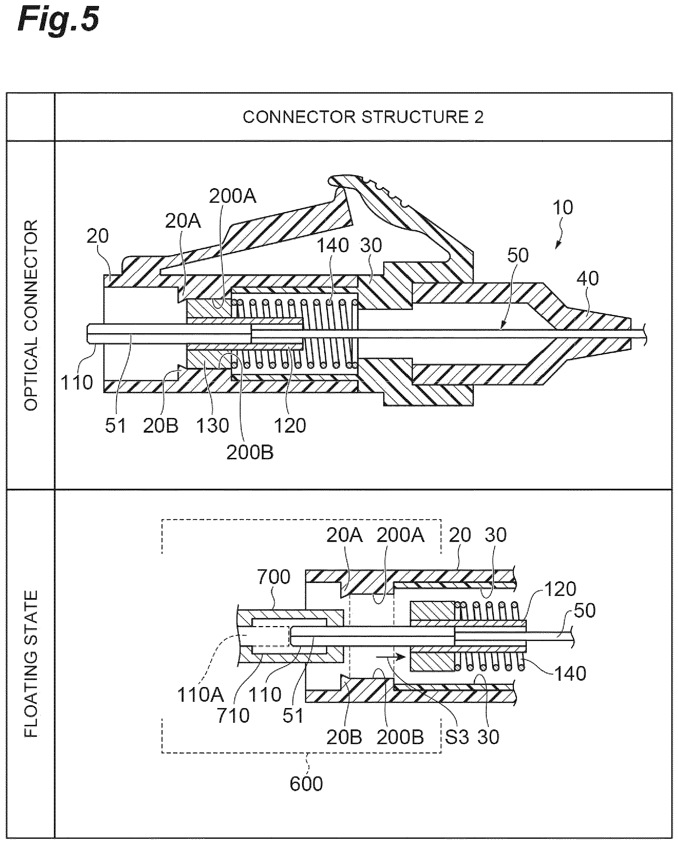

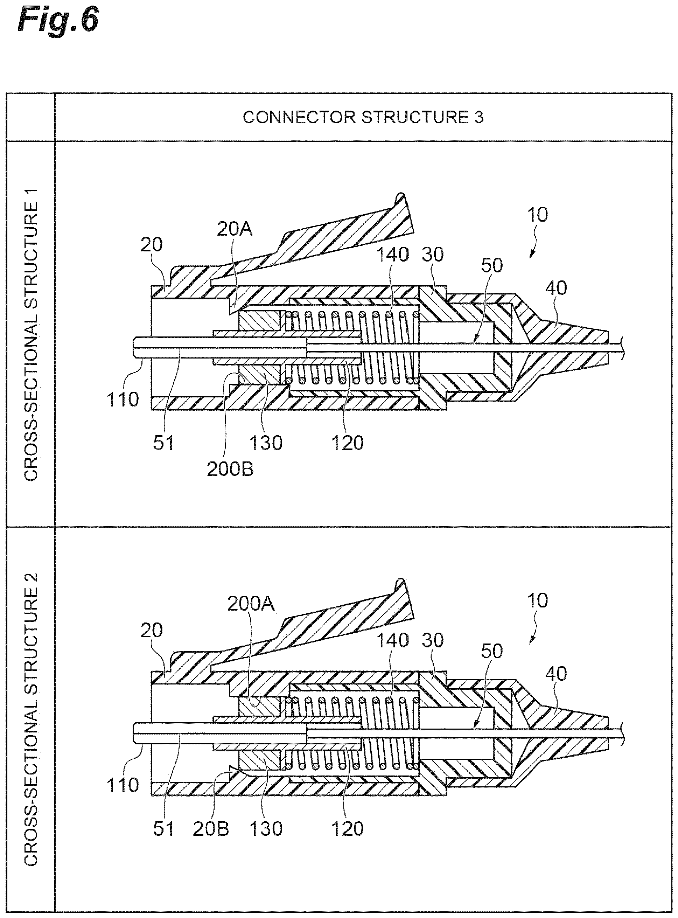

FIG. 5 is a diagram for explaining a cross-sectional structure of each part of the optical connector of the present disclosure (in FIG. 5, referred to as "Connector Structure 2") and a floating structure of the ferrule assembly accommodated in the housing. Specifically, the upper row is a cross-sectional view of optical connector 10 along the line I-I shown in the uppermost row of FIG. 1 (in FIG. 3, referred to as "Optical Connector"). The lower row shows a state immediately after respective front end portions of optical connector 10 and a counterpart optical connector are inserted into openings of an adapter to sandwich the adapter, that is, a state where ferrule 110 of optical connector 10 and a ferrule 110A of the counterpart optical connector are contacted (in FIG. 5, referred to as "floating state"). In addition, FIG. 6 is a diagram showing modified examples of an internal structure of the optical connector of the present disclosure (in FIG. 6, referred to as "Connector Structure 3"). Specifically, each of the upper row (in FIG. 6, referred to as "Cross-sectional Structure 1") and the lower row (in FIG. 6, referred to as "Cross-sectional Structure 2") corresponds to a cross-sectional view of optical connector 10 along the line I-I shown in the uppermost row of FIG. 1.

As shown in the lower row of FIG. 5, optical connector 10 has a structure in which ferrule 110 is inserted into an alignment sleeve 710 in an adapter 600, and thereby optical connector 10 is mounted on adapter 600.

As shown in the upper row of FIG. 5, optical connector 10 has the housing for stably accommodating ferrule assembly 100 attached to the tip portion of optical fiber 50. The housing of optical connector 10 is constituted by front housing 20 and rear housing 30 fitted into front housing 20, and boot 40 is fixed to rear housing 30 in a state where optical fiber 50 passes through rear housing 30. A tip of ferrule 110 constituting a part of ferrule assembly 100 protrudes from a front opening of front housing 20. In addition, positioning parts 20A and 20B having inclined surfaces are provided on the inner wall surface of front housing 20 and the edges of flange 130 of ferrule assembly 100 to be accommodated are to be in contact with the inclined surfaces. Further, reference surfaces 200A and 200B, which contact with the outer peripheral surface of flange 130 of ferrule assembly 100, are provided on the inner wall surface of front housing 20. Recessed part 210A is provided on upper reference surface 200A, and recessed part 210B is also provided on lower reference surface 200B.

Recessed part 210A provided on upper reference surface 200A and recessed part 210B provided on lower reference surface 200B can be easily achieved by an injection molding method which is a typical manufacturing method of a housing, and the optical connector of the present disclosure can achieve both low connection loss characteristics and manufacturability. Further, as the portion functioning as the positioning part, only positioning part 20A may be provided as shown in the upper row of FIG. 6, or only positioning part 20B may be provided as shown in the lower row of FIG. 6.

Meanwhile, a spring member 140 as the elastic member is accommodated in rear housing 30, and when rear housing 30 is inserted into front housing 20 from a rear of front housing 20, spring member 140 is compressed by being sandwiched between ferrule assembly 100 accommodated in front housing 20 and a front portion of rear housing 30. A through hole for drawing out optical fiber 50 is provided in a rear portion of rear housing 30. At this time, ferrule assembly 100 receives an elastic force from spring member 140 due to a restoring force of spring member 140, and flange 130 becomes an urged state. That is, an edge of an end surface located at front surface 130a of flange 130 is pressed against positioning part 20A and positioning part 20B of front housing 20.

Next, as shown in the lower row of FIG. 5, adapter 600 to which optical connector 10 is mounted has a first opening into which the front end portion of the counterpart optical connector is inserted and a second opening into which the front end portion of optical connector 10 is inserted. Further, adapter 600 accommodates alignment sleeve 710 which is a split sleeve and a sleeve holder 700 for holding alignment sleeve 710. After the front end portion of optical connector 10 is completely inserted into the second opening of adapter 600, that is, after ferrule 110 is inserted into alignment sleeve 710, when ferrule 110A of the counterpart optical connector is inserted into alignment sleeve 710 through the first opening, ferrule assembly 100 in optical connector 10 is in a flange-back state. That is, ferrule assembly 100 is retracted in the housing of optical connector 10 along a direction indicated by an arrow S3 of the lower row of FIG. 5. As a result, ferrule assembly 100 is in the floating state in which ferrule assembly 100 is installed at a position away from the inner wall surface in optical connector 10 in the urged state.

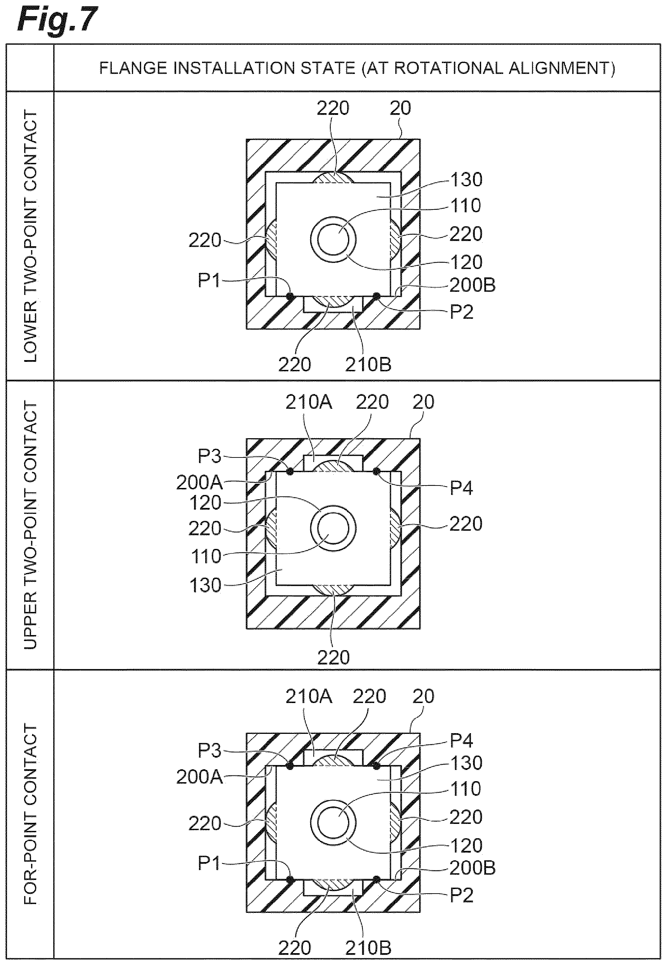

FIG. 7 is a diagram for explaining flange installation states at the time of rotational alignment in the housing. Specifically, the upper row shows a state where flange 130 of ferrule assembly 100 is disposed on lower reference surface 200B on which recessed part 210B is provided (in FIG. 7, referred to as "Lower Two-Point Contact"). The middle row shows a state where flange 130 of ferrule assembly 100 is disposed on upper reference surface 200A on which recessed part 210A is provided (in FIG. 7, referred to as "Upper Two-Point Contact"). The lower row shows a state where flange 130 of ferrule assembly 100 sandwiched between upper reference surface 200A on which recessed part 210A is provided and lower reference surface 200B on which recessed part 210B is provided (in FIG. 7, referred to as "Four-Point Contact").

In the upper row of FIG. 7, flange 130 having deformed portion 220 shown in the lower row of FIG. 3 is disposed in the housing shown in the upper row of FIG. 6 having lower reference surface 200B on which recessed part 210B is provided. At this time, the outer peripheral surface of flange 130 and reference surface 200B are in direct contact with each other at two points of a contact part P1 and a contact part P2 shown in the upper row of FIG. 7. That is, the reference for rotation angle of flange 130 and the reference for rotation angle of reference surface 200B coincides with each other, and thus the rotational direction of optical fiber 50 in which ferrule 110 is attached to the tip portion coincides with the reference direction. Note that contact part P1 and contact part P2 are both regions having areas large enough to allow flange 130 to be stably installed.

In the middle row of FIG. 7, flange 130 having deformed portions 220 shown in the lower row of FIG. 3 is disposed in the housing shown in the lower row of FIG. 6 having upper reference surface 200A on which recessed part 210A is provided. At this time, the outer peripheral surface of flange 130 and reference surface 200A are in direct contact with each other at two points of a contact part P3 and a contact part P4 shown in the middle row of FIG. 7. That is, the reference for rotation angle of flange 130 and the reference for rotation angle of reference surface 200A coincides with each other, and thus the rotational direction of optical fiber 50 in which ferrule 110 is attached to the tip portion coincides with the reference direction. Note that contact part P3 and contact part P4 are both regions having areas large enough to allow flange 130 to be stably installed.

In the lower row of FIG. 7, flange 130 having deformed portion 220 shown in the lower row of FIG. 3 is disposed in the housing shown in the upper row of FIG. 5 having upper reference surface 200A on which recessed part 210A is provided in and lower reference surface 200B on which recessed part 210B is provided. At this time, the outer peripheral surface of flange 130 sandwiched between reference surface 200A and reference surface 200B is in direct contact with both reference surface 200A and reference surface 200B at four points from contact part P1 to contact part P4 shown in the lower row of FIG. 7. That is, the reference for rotation angle of flange 130 and the reference for rotation angle of reference surface 200B coincides with each other, and thus the rotational direction of optical fiber 50 in which ferrule 110 is attached to the tip portion coincides with the reference direction.

### REFERENCE SIGNS LIST

10 ... optical connector
20 ... front housing
20A, 20B ... positioning part
30 ... rear housing
40 ... boot
50 ... optical fiber
50A ... multi-core optical fiber (MCF)
50B ... polarization maintaining optical fiber (PMF)
50C ... bundle fiber
51, 51A, 51B, 510 ... glass fiber
52A 52B 520 ... core
53A, 53B ... common cladding
54 ... stress applying part
100 ... ferrule assembly
110 ... ferrule
120 ... sleeve
120a ... front end surface
120b ... rear end surface
130, 130A ... flange
130a ... front surface
130b ... rear surface
132 ... through hole
133 ... projection
140 ... spring member
200A, 200B ... reference surface
210A, 210B ... recessed part
220 ... deformed portion
500 ... single-core optical fiber
530 ... cladding
600 ... adapter
700 ... sleeve holder
710 ... alignment sleeve
800 ... holding part
S1, S2, S3 ... arrow
L_{A}, L_{R} ... line
P1 to P4 ... contact part

## Claims

1. An optical connector comprising:
an optical fiber including a glass fiber and a resin coating covering the glass fiber;
a front end portion;
a rear end portion positioned on a side opposite to the front end portion;
a ferrule assembly including a ferrule and a holding part, the ferrule being fixed to, of the optical fiber, a tip portion of the glass fiber exposed from the resin coating, a rear end portion of the ferrule being fixed to the holding part, the holding part being provided with a flange;
a housing including an inner wall surface, a reference surface, and a positioning part, the inner wall surface defining an internal space in which at least the holding part of the ferrule assembly is accommodated, the reference surface constituting a part of the inner wall surface and being positioned to face a part of an outer peripheral surface of the flange, the positioning part being provided for restricting a movement of the holding part in the internal space; and
an elastic member configured to urge the flange toward the positioning part,
wherein the reference surface includes two contact parts provided apart from each other by a predetermined distance and restricting a rotational direction of the flange as a result of a part of the outer peripheral surface of the flange contacting the contact parts.

2. The optical connector according to claim 1,
wherein the reference surface includes a recessed part, and
wherein the recessed part includes a bottom portion provided at a region interposed between the contact parts, the bottom portion facing the outer peripheral surface of the flange without contacting the outer peripheral surface of the flange.

3. The optical connector according to claim 2,
wherein the flange includes a projection, and
wherein the projection is provided on the outer peripheral surface of the flange and is accommodated in the recessed part.

4. The optical connector according to any one of claims 1 to 3,
wherein the optical connector has a floating structure, and
wherein the floating structure is such that the ferrule is pushed toward the rear end portion of the optical connector from the front end portion of the optical connector to thereby vary an installation position of the ferrule assembly in the housing.

5. The optical connector according to any one of claims 1 to 4,
wherein an external shape of the flange is a quadrilateral shape when the flange is viewed toward the rear end portion of the optical connector from the front end portion of the optical connector.

6. The optical connector according to claim 5,
wherein a pair of corners of the external shape are curved, at least one of facing sides of the external shape being interposed between the pair of corners.

7. The optical connector according to any one of claims 1 to 6,
wherein the optical fiber is any one of a multi-core fiber, a polarization maintaining optical fiber, and a bundle fiber.
